# EUROPEAN PATENT SPECIFICATION

(11) **EP 1 969 528 B1**
(45) Date of publication and mention of the grant of the patent: **25.05.2011**
(21) Application number: 05823634.0
(22) Date of filing: 22.12.2005
(51) Int. Cl.: G06K 9/68, G06K 9/00

(54) **BIOMETRIC AUTHENTICATION SYSTEM**
BIOMETRISCHES AUTHENTIFIKATIONSSYSTEM
SYSTÈME D'AUTHENTIFICATION BIOMÉTRIQUE

(43) Date of publication of application: 17.09.2008
(73) Proprietor: Daon Holdings Limited, George Town, Grand Cayman (KY)
(72) Inventor: AHERN, James, Co. Meath (IE); PEIRCE, Michael, Dublin, 6 (IE)
(74) Representative: Moore, Barry
(86) International application number: PCT/EP2005/057113
(87) International publication number: WO 2007/071289

(56) References cited:
- EP-A- 1 160 721
- EP-A- 1 187 057
- WO-A-03/009111
- US-A1- 2004 125 993
- US-A1- 2004 199 776
- JAIN A K ET AL: "Learning user-specific parameters in a multibiometric system" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 57-60, XP010607259 ISBN: 0-7803-7622-6
- WAYMAN J L: "Multifinger Penetration Rate and ROC Variability for Automatic Fingerprint Identification Systems" AUTOMATIC FINGERPRINT RECOGNITION SYSTEMS (RATHA & BOLLE EDS.), 2004, pages 305-315, XP002366886

## Description

### Field of the Invention

The present invention relates to biometric authentication systems and in particular to biometric authentication systems that are configured to dynamically update the matching thresholds used during the authentication process based on user activity within the system. The invention also relates to biometric authentication systems which are configured to dynamically apply different matching thresholds depending on the circumstances of the authentication process.

### Background

Systems for authenticating the identity of an individual are now becoming widely deployed. Such systems may be used for a plurality of different reasons for example to enhance security at a border crossing, to identify individuals in a citizen ID scheme, to allow physical access to a building, to provide logical access to networks and computer applications, to prove identity during retail transactions, amongst many other possible applications.

Known techniques used within such authentication systems for validating the identity of an individual include the use of passwords, tokens, biometrics, or any combination of these. Within a biometric-based system, biometric samples are initially captured from an individual and enrolled, or stored, within the system for use in later authentications. Examples include fingerprint, iris, or face images, or a recorded sample of a voice.

Features may be extracted from the image to generate biometric templates. These are usually a smaller compact representation of the biometric features present in the image. Typically, the templates are used in the day-to-day operations of the system to authenticate individuals whereas the original biometric data or image is stored or archived.

At a later date or time a user supplied biometric sample is then tested against the stored template and if a match, within a desired confidence level, is obtained then the user is authenticated. An authentication may be performed using one or more biometric samples from one or more biometric modes. For each individual sample, the verification sample is typically compared against one or more enrollment samples or templates derived from those samples. This comparison is performed by one or more matching algorithms, which typically output a matching score indicating the similarity between the two compared samples. Ideally, this score will be well-distributed across all possible samples in the space.

As such a biometric authentication system may be considered as constructed of plurality of different components; a sensor to record the presented biometric, a computer unit to process and eventually save the presented biometric and an application, for which the user's authentication is necessary. The computer unit which processes the presented biometric for authentication or otherwise includes a processing unit that includes a "feature extraction unit" which filters the uniqueness data out of the raw data coming from the sensor and combines them into the request template, a "matcher" which compares the request template with the reference template and delivers a "score" value as result, and a "decision unit" which takes the score value (or values) as well as the threshold to determine whether the user is authorized or non-authorized.

The matcher incorporates a matching algorithm which will deliver some level of biometric accuracy depending on the acquisition devices, acquisition methods, quality scoring algorithms, environment, and population present, amongst other factors. The"decision unit" compares the score derivable from the matcher with a pre-established threshold and if the score meets an established confidence level then the user is authenticated and if it fails they are rejected.

In order to define an appropriate threshold value for a specific authentication engine one considers a number of measures which determine the effectiveness of a biometric authentication system and examples of these are listed below:
False Acceptance Rate (FAR)
   A FAR is a measure of the frequency that a non authorized person is accepted as authorized, given a number attempts to perform that authorization. Such authorization of a non authorized person is an obvious security breach and as a result a FAR is generally considered a security relevant measure: A FAR may be considered a systematic indicator.
False Rejection Rate (FRR)
   The FRR is similar to the FAR but is the frequency that an authorized person is rejected access. In a verification system, such authorization failure of an authorized person is considered as an inconvenience to that person. This does not constitute a security breach in the same way as a FAR.
False Match Rate (FMR).
   The FMR is the rate which non-authorized people are falsely recognized during the matching comparison process. Therefore the FMR may be considered an indicator of the effectiveness of the matching algorithm as opposed to the system error.
False Non-Match Rate (FNMR).
   The FNMR is the rate that authorized people are falsely not recognized during feature comparison. Similarly to the FMR, and in contrast to the FRR, attempts previously rejected are not accounted for, and it can therefore be considered an algorithm indicator.

The above definitions are described in the context of a verification or positive identification system where the purpose is to confirm that the authorized person is enrolled in the system. In a negative identification system the purpose is to confirm that a person does not appear in the enrolled system; sample applications include use of criminal watch-lists or ensuring that a new applicant to a system (e.g. voting) is not already registered in that system. In the case of negative identification the FRR or FNMR does constitute a security breach because if the person is incorrectly rejected then that person has avoided detection even though they are already enrolled. Similarly, for negative identification the FAR or FMR constitutes an inconvenience for the genuine person because they have been incorrectly matched against another person already enrolled in the system.

The effectiveness of the authentication system can be measured using either a combination of the FAR with FRR or FMR with FNMR and it is important to ensure that their ratios are kept to an appropriate level. It is important for an effective system that too many who should be allowed access are not allowed access whereas too many who should not be allowed access are allowed access. There is a trade off in these measurements and this tradeoff defines the threshold for the system.

To determine this ratio, it is known by the suppliers of biometric processing algorithms to generate receiver operating characteristic curves (ROCs). In order to create an ROC curve, a biometric system test usually starts by determining the similarities of different biometric features and a saved reference feature. After many measurements, one receives a histogram or distribution for authorized users and another for unauthorized users showing the frequency of matches per similarity rating. In an ideal case, the two distribution graphs should overlap as little as possible. Through integration of these distribution graphs, FAR/FMR and/or FRR/FNMR graphs are determined, which are dependent on the data from which they were generated. If one wants to compare different biometric systems, it is problematic in that algorithmic value "similarities" or, inversely, "distances" are defined very differently, and therefore threshold values often have incomparable meanings. This difficulty is avoided by a ROC, in which the similarity threshold parameter is eliminated and FRR or FNMR is seen as a function of FAR or FMR respectively. By plotting either the FRR as a function of the FAR or the FNMR as a function of the FMR it is possible to visualize the performance of the system and to choose from the values generated a threshold value which will give an appropriate level of confidence in the security achievable with the system. Many suppliers of biometric algorithms provide to the vendors of the authentication systems one such threshold value from the generated ROC curve for their specific algorithm and this can be considered a fixed static score threshold value. It will be appreciated that a ROC is just a graphical representation of a threshold table.

Existing deployments typically just select this one supplied fixed static score threshold, and use this as the matching decision threshold. For example, scores at or above the threshold are accepted as successful matches, and scores below are rejected, or vice-versa. The problem with such a static threshold is that no account is taken of the specifics of the enrolment process, the specifics of the authentication process or other parameters.

It will be further understood that the definition or construction of a ROC is dependent on the usage pattern of the parameters that define that specific ROC. As the ROC is a statistical representation of the results obtained using a specific set of data parameters it will be understood that the greater the statistical population that is used to define the ROC, the better the representation the ROC will be of the overall efficiency of the system. Furthermore it is possible that continued use of authentication systems using a specific ROC may provide an indication that the parameters making up that ROC are not optimized and require tuning or some other form of modification. However, heretofore once a biometric authentication system has been deployed it stands alone and the threshold values that are used to authenticate the user are based on the parameters that were available at the time of deployment of the system. These parameters can, over time, become superseded or redundant but this is not reflected in the authentication process. As a result the security levels and/or convenience levels that are achievable with an out of date authentication system are less than is possible with an up-to-date system.

The European patent EP1160721 discloses a biometric authentication method which includes determination and use of ROC curves. By means of ROC curves raw biometric scores are converted in standardised FAR and FRR measures.

### Summary

The invention provides a biometric authentication system according to claim 1 with advantageous embodiments provided in the dependent claims thereto. The invention also provides a method of authenticating a user in a biometric authentication environment as provided in claim 11.

In accordance with another embodiment of the invention a network architecture is provided as detailed in claim 7 with advantageous embodiments provided in the dependent claims thereto.

These and other features of the present invention will be better understood with reference to the following drawings.

### Brief Description of the Drawings

Figure 1 is a score distribution curve providing a visualization of how actual score threshold changes affect False Match Rates and False Non-Match Rates error-rates.
Figure 2 is an example of a Receiver Operator Characteristic curve as calculated for five different algorithms.
Figure 3 is a schematic of components of a biometric authentication system in accordance with the present invention.
Figure 4 is a process flow showing exemplary steps involved in an authentication request in accordance with the teachings of the invention.
Figure 5 is a schematic of a biometric authentication system.
Figure 6 is as schematic of a distributed network architecture incorporating a plurality of biometric authentication engines.

### Detailed Description of the Drawings

As mentioned above with reference to the background to the invention known biometric authentication engines use static fixed thresholds and policies as part of their authentication process. The present inventors have realized that there are a plurality of different factors which may affect the performance and accuracy of such authentication systems. Such factors include but are not limited to the specifics of the biometric enrollment acquisition device, the algorithm and environment, the biometric authentication acquisition device, algorithms and environment, the deployed population, quality scoring algorithms, filters, matching algorithms, populations, environments, authorization protocols, configurations, and over time. All these factors can contribute to the overall accuracy achievable with the authentication system. This becomes particularly important in a distributed biometric authentication system where a user may be enrolled using one set of parameters and then tested at a later date using a completely different set of parameters.

The present inventors have realized in the light of the contribution that each of these individual factors make to the overall accuracy that, each time any one of these factors changes, the threshold required to achieve a similar confidence internal (e.g. FAR=1 E-5) needs to be altered. Using this knowledge the present invention provides for an authentication process that can be applied in an authentication engine with biometric authentication capabilities (1:1, 1:few, 1:N) for multiple biometric modes, algorithms (matching, quality, filtering), and readers.

The present inventors, using their knowledge that a plurality of different parameters can affect the confidence levels achievable with an authentication of a user, have provided an authentication system that utilizes difference confidence threshold tables depending on the specific circumstances of the authentication process being conducted. Furthermore, the present inventors have used their knowledge that a single performance number cannot adequately represent the capabilities of a biometric matching algorithm that can operate at selectable thresholds. Instead the threshold table, which equates to a non-graphical ROC curve, is used to show how the accuracy varies over a range of operating points. Current best practices in biometrics performance testing also recommend the use of ROC curves in evaluation of different biometric systems, but not in the authentication process itself.

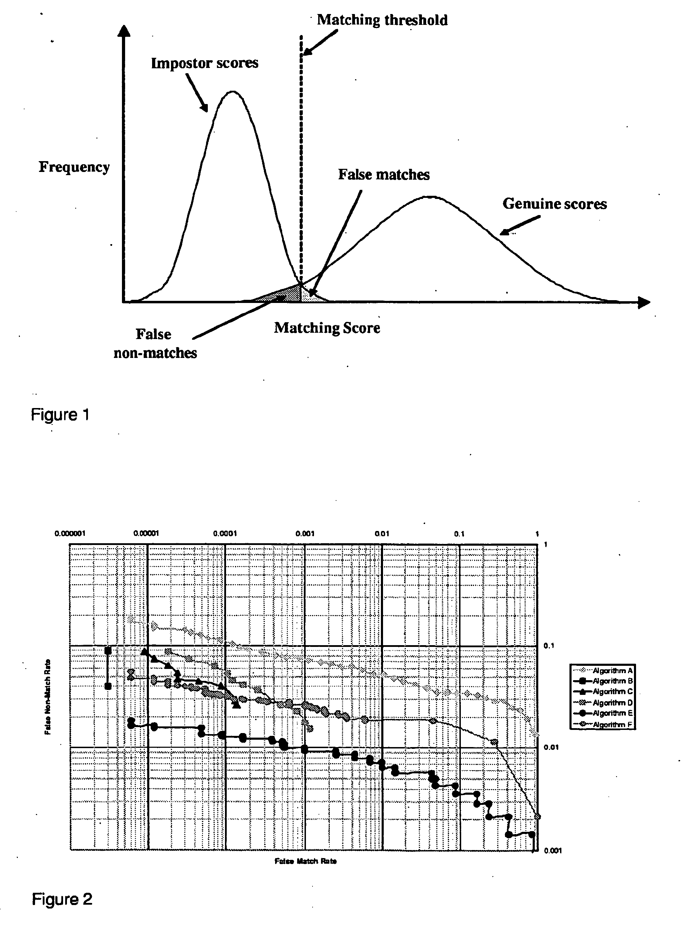

As mentioned above, a ROC curve for FMR/FNMR plots the probability of a false-match against that of a false non-match for a single match attempt. It shows the tradeoffs available for a given matching algorithm on images captured from a specified device, in a given environment and population. Where a verification protocol allows multiple attempts per session the ROC shows the probability of a false-accept (FA) against that of a false reject (FR) for the number of attempts allowed by the authentication protocol. The *score distribution curve* shows the frequency of matching algorithm scores returned for all genuine and impostor attempts. Each score will correspond to a point on the corresponding ROC curve. The score distribution curve gives a good visualization of how actual score threshold changes affect the FMR and FNMR error-rates, as illustrated in Figure 1.

An aspect of the present invention provides within the biometric authentication engine a number of distinct ROC curves (or the threshold tables that are used to generate these curves); with each ROC curve being specific to a set of parameters that are used to generate that ROC curve. The effect of variances on the threshold accuracy is shown in Figure 2. This ROC shows different algorithm accuracies obtained with a single sensor, using the same population. The algorithm-sensor combination, labeled as Algorithm C, gave an FNMR of 1.3% when the FMR was 0.01 %, and a FNMR of 1.6% when the FMR was 0.001 %. This graph could be used to select one algorithm's accuracy over another for use with a specific sensor, or indeed to select the appropriate algorithm for that sensor.

Within the system, a different ROC threshold table may be used for each possible factor change. The system supports multiple different ROCs depending on the enrollment/verification device combination, the population and the environment etc. Such differences may include "cross-device" ROCs, where an enrollment sample was captured from device-A and the verification sample was captured from device-B. For example, in order to operate at a confidence level with an FAR of 1 in 100,000 (FAR=1 E-5) one might need to obtain a score of 68 or above using algorithm A and device-A for both enrollment and verification. However, using the same algorithm-A but device-B for both enrollment and verification requires a score of 80 to produce the same FAR confidence level. It will be appreciated that if the prior art methodology of using the same single static threshold is used for both cases, the actual error rates achieved are unknown. Those using device-A will be required to achieve higher scores than necessary, and this will result in a higher false non-match rate (FNMR) and degrade overall biometric performance. Alternatively, those using device-B will only have to achieve the lower score threshold, which will mean that the actual FAR will be lower than the requested confidence interval, resulting in more false accepts which is very undesirable.

Further ROC curves may be provided with their data specific to the demographics (e.g. gender or age) of the population. Further ROC curves may be provided for the type of biometric sample that is used for authentication. Yet more ROC curves may be provided for the type of capture apparatus that may be used as part of the authentication process, and/or the positioning and usage protocol for that apparatus.

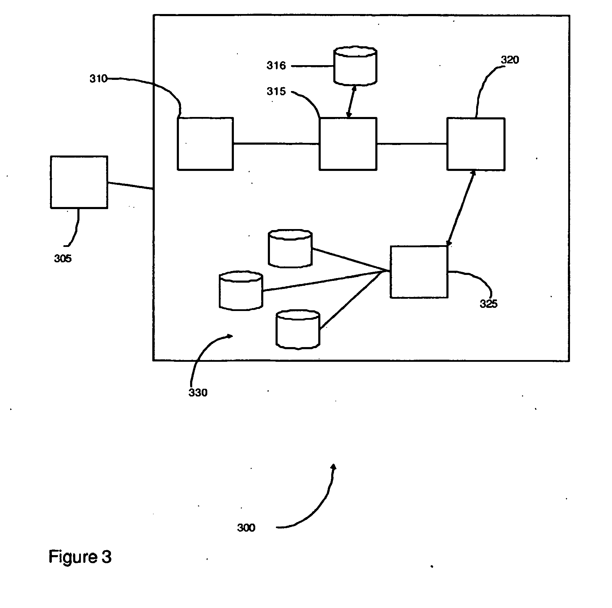

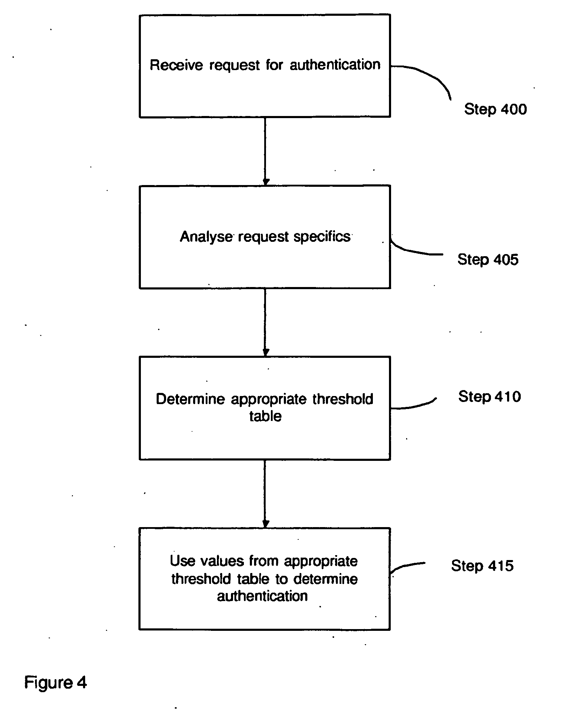

Figure 3 shows a typical architecture for a biometric authentication system 300 according to the invention, and the operation of same will be described with reference to the process flow of Figure 4. Similarly to the prior art, the authentication system may be considered to include a capture device 305 which is a piece of hardware configured to capture a specific type of biometric sample. Examples of such capture devices include retina scanners, fingerprint scanners and the like, all of which will be well known to the person skilled in the art. The user requesting authentication (step 400) has their biometric sample captured. It is then processed by a processing unit 310 that includes a feature extraction unit which filters the uniqueness data out of the raw data coming from the sensor and combines them into the request template. This request template is then transferred to a matcher 315 which compares the request template with a previously stored reference template and delivers a matching score value as result. The previously stored template is identified and retrieved from a datastore 316 in one of a plurality of different manners as will be apparent to the person skilled in the art. This matching score is then transferred to a decision unit 320 which takes the matching value (or values) calculated as well as a threshold score to determine whether the user is authorized or non-authorized. The present invention also includes a threshold evaluator 325, which is configured to analyse the specifics of the authentication request, for example to determine the type of hardware used for both the recordal of the reference template and the sample template, the algorithms used in the filter extraction and/or matching processes etc., (Step 405) and determine which of a plurality of available threshold tables 330 should be used to provide the threshold score for this decision (Step 410).

Once the appropriate threshold table has been identified and as part of the authentication process that is conducted, each generated matching score that results from a comparison of the presented biometric with the stored biometric is then mapped with a point on the corresponding ROC that is specific to the circumstances of this matching process. This mapping is automatically selected by the system based on an interrogation of the background to the matching and once the appropriate ROC table has been identified and selected, the error rates are computed from that table. It will be appreciated that a match involving multiple samples or biometric modes may result in several different scores, with a different ROC applied to each score. The scores or the corresponding confidence levels can be fused or computed to produce an overall result. The result obtained is then compared with the requested confidence level to ascertain whether the user should be authenticated or not (Step 415). It will be understood that depending on the nature of the match being effected that authentication may be effected on the output score being greater than, equal to or less than the threshold score. For example with an FMR threshold, the smaller the number the better (e.g. an FMR of 0.00001 is a BETTER score than 0.01, and in this case the output score must be less than (a smaller number) the threshold score. As will be appreciated by those skilled in the art the use of FMR thresholds is typical in authentication systems.

It will be appreciated that the components of the authentication system 300 could be provided on one or more computing systems or even distributed across a networked architecture. Examples of such distributed architectures include those described in our earlier application W003009111. The process may also take place entirely, or in part, on tokens such as smart cards. Furthermore the invention is not to be limited to order of the sequence of steps shown in Figure 4. The benefit from the system of the present invention arises from the fact that the authentication process is tailored to the specifics of the authentication request.

Such a system becomes even more relevant when deploying the recent biometric template interoperability standards such as those for minutiae templates. These are planned for use in passports globally as part of increases in passport security. The minutiae template standard defines an open format for storing and matching fingerprint minutiae points, created by different algorithms. For example, an enrollment template might be created by algorithm-A on device-A, while the verification template might be created by algorithm-B on device-B, and both templates matched by algorithm-C. The interoperability allows this interchange of templates between different vendors. However, as explained above, the biometric accuracy will always differ depending on the devices, algorithms, and other factors present.

The enrollment attributes (device, quality algorithm, template generation algorithm) are associated with the enrollment template. These along with the verification template attributes, and the environment/population factors are used to select the most appropriate ROC table to compute the confidence levels achieved from the matching scores. This will yield superior and more accurate results, and avoid the problems associated with static thresholds. The system may be used with any other template and image standards, other than the minutiae-template example used here.

The exemplary embodiment has referred to the use of ROC curves. However, there are other accuracy statistics and corresponding graphs that can be used to measure the biometric performance in different scenarios. For example, a Cumulative Match Characteristic (CMC) curve may be used to show the probability of identification (1:N) against the returned candidate list size. It shows the probability that a given person appears in different sized candidate lists. The faster the CMC curve approaches one (on the y-axis), indicating that the person always appears in the candidate list of specified size, the better the matching algorithm for the particular scenario under consideration. In the same way that different ROC threshold tables were utilized in the authentication decision process, one or more CMC threshold tables may also be used in an identification decision process. For example, the number of potential candidate matches returned may be dynamically decided based on information in a CMC table, where that table was selected to best match the parameters of the authentication request: It will be appreciated that what has been described herein is an improved biometric authentication system which provides for a tailoring of the authentication process to the specifics of the authentication, request. Such a tailoring of the specifics based on a plurality of tables, each table being generated as a result of the performance of specific parameters relative to a measured authentication process is greatly beneficial vis a vis the prior art techniques.

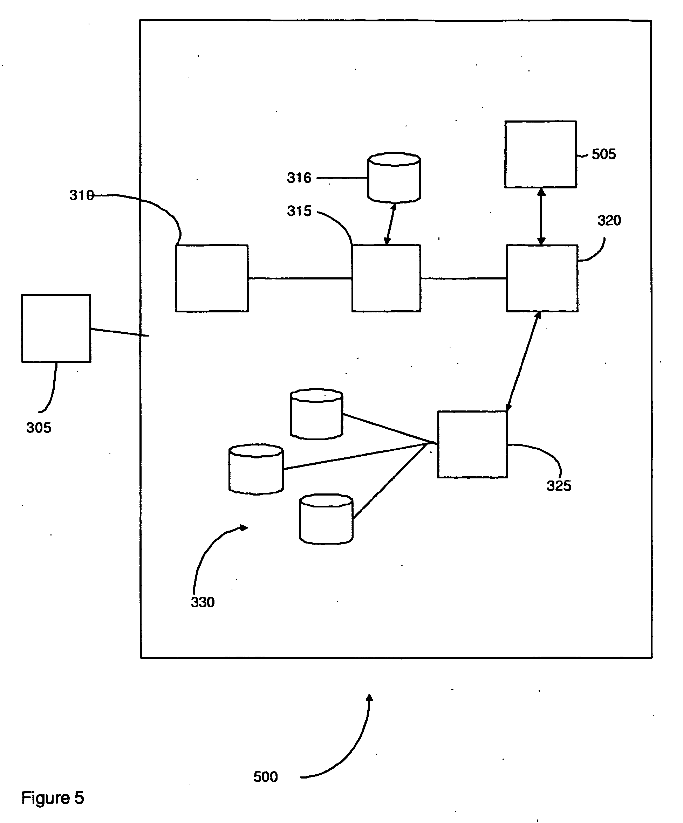

In an embodiment of the invention, an example of which is shown in Figure 5 (where the same reference numerals are used for common components from the architecture described before), a system 500 and method is provided which provides for a dynamic tuning of one or more of these tables based on an on-going monitoring of parameter performance. It will be appreciated that as the tables are the result of statistical analysis of the performance of systems using the specific parameters that an increase in the pool of data that is analysed to provide the statistical output will provide an improved reflection of the actual performance. In this embodiment of the invention an authentication system is provided which is configured to collect biometric data during transactions and based on a subsequent analysis of this data, to update the parameters that are used in the authentication process. In this manner the embodiment of the invention provides a self-tuning self-managing biometric engine.

By enabling this update of the threshold parameters that are used to authenticate a user such a self-tuning system can cater for the variances that are known to effect biometric systems as a result of variances such as time variances. Furthermore when used in the context of the plurality of threshold tables, with each threshold table being suited to a specific set of user inputs or parameters associated with a specific authentication request, such a self tuning application may be used both to update the tables already present in the authentication engine or to introduce new tables if and when these become available. Such monitoring and tuning of the performance of a specific authentication engine may be provided on a periodic or continuous time frame. It is also not possible using the existing architectures to change the thresholds that are set to enable authentication over time. An example of where this could be useful is where a first set of low thresholds are initially used in a deployment where users may not be familiar with the system or methodology. As their familiarity increases it becomes appropriate to increase the threshold parameters- which can be achieved with a system where dynamic tuning can be implemented.

In order to implement such a dynamic update of the authentication system the present invention provides for the maintenance of an audit or log of the biometric data that is processed during its daily operation. Such a log function is provided by providing an audit module 505 which is configured to interact and monitor the processing of data by the decision unit 320. This biometric data can range from multi-frame captures, single images, templates, quality scores, matching scores, filtering results etc. Additional audit data might include authentication location, timings around the transaction, user identity, operator identity, reader/sensor identity, time-of-day etc. The captured data (biometric and other data types) can be analysed in real-time, or otherwise, and the results of this analysis used to tune the performance of the authentication engine or indeed of other connected authentication engines.

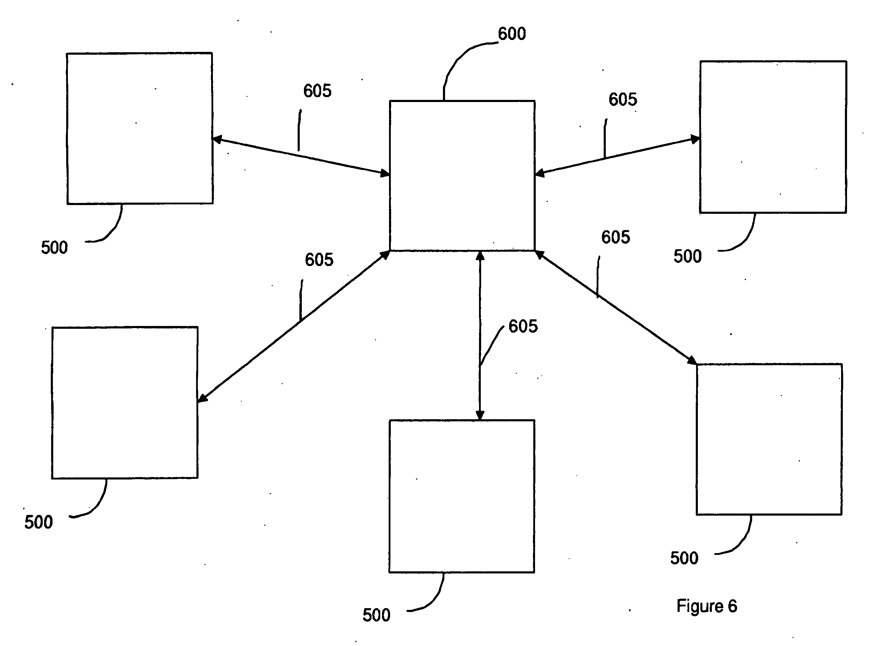

An example of such a distributed network of authentication engines is shown in Figure 6 with again the same reference numerals being used for previously described components. In this architecture a plurality of individual engines 500 are provided each of which is self sufficient in being able to authenticate a user presenting at biometric capture device coupled to that engine. However by enabling one or all of the engines to log the data that is processed at that engine, the overall statistical pool is increased beyond that possible at one unique site. Each of the audit modules 505 can be configured to either dynamically update the data used from data collected locally or can be configured to present their collected data to a remote data processing engine 600 which takes multiple feeds 605 to define new data sets than can then be pushed out to the individual data stores 330.

It will be appreciated by those skilled in the art that the type of analysis that can be performed and the many ways that the results of this analysis can be used to update the configuration of or modify the behaviour of the authentication engine may be varied. For example as shown in Figure 6, the logged data may be collected centrally by a processing engine 600, from data sent to it by clients and/or other engines 500 or indeed can be processed remotely at each of the clients 500. Furthermore in a distributed network of authentication engines, such as that described in our earlier application WO03009111, certain engines may be selected as audit engines configured to maintain a monitoring of the authentications performed at that engine and once data has been collated and an update data set compiled that that data set may then be pushed to cooperating yet remote engines where it is used to update the data sets that are used locally at those engines. The amount of data logged is configurable, and can be limited to specific services, groups, users, or random selections taking for example privacy issues into account.

It will be further appreciated that if the data audit or log is to be used across different platforms or system architectures that it is advantageous that the data be stored in a platform independent fashion such as for example XML format. Alternatively the processing function may include one or more software utilities that are configured to translate or transform the data from proprietary formats to a format that can be immediately processed by the analysis application responsible for dynamically tuning performance.

The following non limiting examples are provided as exemplary illustrations of the type of analysis operations that may be performed once the data has been logged.

It will be understood that performing on an update on the system parameters that are used to authenticate a user may not be desirable during certain time period or within certain time intervals. In accordance with the system of the invention policies may be implemented that will restrict and control for example how much tuning takes place, which analysis applications can perform the tuning, who is given access to the data for tuning, and which biometric components or other may be tuned. Furthermore security procedures may be provided to ensure that an attacker who controls the biometric data fed into the engine does not adversely affect the performance thresholds to his advantage. For example, the can be done by monitoring the deviation from typical data or the deviation of data over time: Alarms can be triggered if a certain level of deviation is exceeded and this may be location specific.

As mentioned above, the data that is logged or saved may be present at different parts in a distributed network and the analysis application can collect it from one or more of these points. For example, this might be provided as a service to several deployments or sites. A single analysis component may use data from several distributed locations (e.g. geographically separated deployments) to selectively tune one or more specific authentication engines or subset of engines, rather than all engines within the distributed network. Both dependent and independent distributed analysis components can co-operate to share their findings and recommendations.

One of the advantages of a self tuning analysis engine is derived from the fact that the system can react to variances in the system which develop over time. For example, the analysis can also create reports of users who may need to re-enroll some or all of their biometrics, users who have difficulty with certain biometrics, users who can be more easily impersonated (lambs), users who can more easily impersonate others (wolves) and so on. For example, user-specific thresholds might be recommended for some of these categories of users or use of alternative biometrics or other technologies:
- Identification of an underperforming location or reader
- Recommendation to replace/clean readers or change environment
- Detection of a change in ambient lighting which adversely affects iris or face recognition
- Recommendation of best biometrics to use for specific users, specific groups of users, specific locations etc.
- Recommendation of new biometric algorithms (matching, quality, filtering) to use which would improve performance over current deployed selections

For example, a receiver operating characteristic (ROC) curve, which shows the FMR/FNMR tradeoffs at all possible thresholds for a specific biometric reader-algorithm combination in a given environment with a given population, can be generated. The authentication engine can use an ROC to dynamically select the matching threshold value that must be achieved to reach a specific FMR or FNMR confidence level. A further example of the application of the self tuning engine is that if the curve differs from the curve currently being used in the authentication engine, or if segments of the curve differ, or if the thresholds have moved, then the new ROC can be used to replace the old one. This updating of the data sets used to authenticate a user, as required, can be used to provide improved accuracy, as the new ROC represents real biometric behaviour, rather than older predicted behaviour. Alternatively, the existing ROC can be updated by combining it with the new ROC using some weighting or other method.

Furthermore, as users become more habituated with a system, the probability of a false reject (FNMR) may fall, thus allowing a stricter false accept rate (FMR) to be set for the same percentage false reject. It will be appreciated that similar examples can be provided for Cumulative Match Characteristic (CMC) curves and FAR tables.

When determining the quality threshold required for a specific enrolment application it will be appreciated that the quality threshold may vary depending on the specifics of the application. Different examples include the quality scores used for image acquisition. For example, by examining the score distribution for the quality scores achieved during image acquisition, better image acquisition thresholds or capture algorithms can be derived and fed back into the engine and its capture clients

Furthermore, the relationship between quality score and match result can be examined, and this used to further tune the acquisition algorithm. For example, the acquisition algorithm might drop the quality threshold that must be met during acquisition over time, and the rate and levels of this drop will have been obtained from ongoing analysis of this data.

It is known that users' biometric data can change over time-e.g. aging of the face, scarring and drying of fingers. As a result of these changes it may be necessary to update the enrollment data over time to allow for these changes. However people change at different rates and some change more radically than others. Using a dynamic system in accordance with the present invention it is possible to provide an analysis process that can dynamically monitor performance on an individual basis, noting when performance degrades below the "normal" level for specific users. It can then recommend from the history of biometric data collected for that individual, how best to update the existing enrollment data-this might range from a complete re-enrollment to partial updating and/or merging of the data.

It will be appreciated that heretofore that the improvement obtainable using a dynamic engine as provided by the present invention has been described with reference to core biometric performance. A dynamic engine according to the teachings of the invention can also measure response times and throughput. For example, average response times, image acquisition times, transaction times, matching times, peak number of requests etc., can all be monitored and the authentication thresholds altered dependent on the normal characteristics associated therewith.

While the invention has been described with reference to exemplary embodiments it will be appreciated and understood, that the invention is not intended to be limited in any way except as may be deemed necessary in the light of the appended claims. Modifications can be made without departing from the scope and spirit of the invention.

The words comprises/comprising when used in this specification are to specify the presence of stated features, integers, steps or components but does not preclude the presence or addition of one or more other features, integers, steps, components or groups thereof.

## Claims

1. A biometric authentication system including:
a decision means configured to authenticate a user,
a capture device for capturing biometric data from a user when requesting authentication,
a processing means for generating a request template from the captured biometric data, the decision means authenticates the user based on a comparison of the request template against one or more previously stored reference templates,
a matching unit for providing as an output a matching score based on a comparison of the request template and the stored reference templates,
the decision means is co-operable with the matching unit for receiving the matching score and is configured to authenticate the user, **characterised in that** the authentication system further includes an audit module configured to:
store biometric data collected from at least one individual for authentication and store data related to authentication of the at least one individual, wherein authentication results are generated utilizing at least one current Cumulative Match Characteristic (CMC) table generated from a corresponding at least one current CMC curve, wherein
the at least one current CMC curve shows the current probability that a given person appears in different sized candidate lists and the current probabilities are calculated from the stored biometric data, and
the current CMC table includes the current probabilities and corresponding candidate list sizes to show the current probability that a person appears in different sized candidate lists;
collect additional biometric data over a period of time, calculate new probabilities that the given person appears in different sized candidate lists using the stored biometric data and the additional biometric data, and generate at least one new CMC table including the new probabilities; and
update the at least one current CMC table to include the new probabilities when the respective new and current probabilities are different.

2. The system as claimed in claim 1 further including interrogation means configured to interrogate the authentication of the at least one individual so as to extract and use predefined parameters to select an appropriate CMC table from a plurality of available CMC tables, each of the plurality of available CMC tables being previously generated for specific parameters.

3. The system as claimed in claim 2 wherein the interrogation means is configured to determine parameters associated with the enrolment of the user and to determine parameters associated with an authentication request.

4. The system as claimed in claim 2 wherein the interrogation means is configured to interrogate an authentication request so as to select a correct CMC table, the correct CMC table having been previously defined for the specifics of the enrollment and authentication request parameters for the user making the authentication request.

5. The system as claimed in claim 2 wherein the interrogation means is configured to interrogate both an authentication request and an enrollment request so as to determine and identify an appropriate policy for that authentication request, the appropriate policy defining a correct CMC table to be used as part of the authentication request.

6. The system as claimed in any preceding claim wherein the at least one new CMC table is used to update the current CMC tables periodically so as to provide a tuning of the system based on system usage.

7. A distributed network of authentication systems as claimed in any one of claims 1 to 6, the network including at least one audit module, the audit module being configured to receive data relating to authentication of at least one individual from at least one of the authentication systems within the network, the audit module being configured to:
generate, after a period of time, at least one new CMC table using biometric data of the at least one individual and data related to authentication of the at least one individual, wherein authentication results are generated for the at least one individual utilizing current CMC probabilities included in current CMC tables and the at least one new CMC table includes new probabilities;
store the biometric data and the related data therein during the period;
judge whether respective new and current CMC probabilities are different; and
update the at least one current CMC table with one or more of the authentication systems within the network when the respective new and current CMC probabilities are different.

8. The network as claimed in claim 7 wherein each of the authentication systems within the network include an audit module.

9. The network as claimed in claim 8 wherein each of the audit modules are configured to communicate with others of the audit modules so as to enable a transfer of updated CMC tables between authentication systems.

10. The network as claimed in claim 7 wherein the audit module is provided distinct from any of the authentication systems, the audit module being configured to communicate with one or more of the authentication systems so as to receive and transmit data relating to the CMC tables used within individual authentication systems.

11. A method of authenticating a user based on user presented biometric sample, the method including:
providing a decision means configured to authenticate a user,
capturing a biometric from a user when requesting authentication,
generating a request template from the captured biometric,
configuring the decision means to authenticate the user based on a comparison of a request template with one or more previously stored reference templates,
providing a matching score based on a comparison of the request template and stored reference templates,
forwarding the matching score to the decision means to authenticate the user, **characterised in that** the method further includes:
storing biometric data collected from at least one individual for authentication and storing data related to authentication of the at least one individual;
generating authentication results utilizing at least one current Cumulative Match Characteristic (CMC) table generated from a corresponding at least one current CMC curve, wherein
the at least one current CMC curve shows the current probability that a given person appears in different sized candidate lists and the current probabilities are calculated from the stored biometric data, and
the current CMC table includes the current probabilities and corresponding candidate list sizes to show the current probability that a person appears in different sized candidate lists;
collecting additional biometric data over a period of time;
calculating new probabilities that the given person appears in different sized candidate lists using the stored biometric data and the additional biometric data;
generating at least one new CMC table including the new probabilities; and updating the at least one current CMC table to include the new probabilities when the
respective new and current probabilities are different.

12. The method as claimed in claim 11 further including comparing the respective new and current CMC probabilities and generating an alert on detecting a predetermined difference between the two probabilities.

## Patentansprüche

1. Biometrisches Authentifizierungssystem, mit
einem Entscheidungsmittel, das zum Authentifizieren eines Nutzers konfiguriert ist, einem Aufnahmegerät zum Aufnehmen biometrischer Daten von einem Nutzer, wenn eine Authentifizierung angefordert wird,
einem Verarbeitungsmittel zum Erzeugen einer Anforderungsschablone aus den aufgenommen biometrischen Daten, wobei das Entscheidungsmittel den Nutzer auf Basis eines Vergleichs der Anforderungsschablone mit einer oder mehreren zuvor gespeicherten Referenzschablonen authentifiziert,
einer Paarigkeitseinheit zum Bereitstellen einer Paarigkeitsbewertung als einen Ausgang auf Basis des Vergleichs der Anforderungsschablone mit den gespeicherten Referenzschablonen,
wobei das Entscheidungsmittel mit der Paarigkeitseinheit zum Empfangen der Paarigkeitsbewertung zusammenarbeiten kann und zum Authentifizieren des Nutzers konfiguriert ist,
**dadurch gekennzeichnet, dass** das Authentifizierungssystem ferner ein Audit-Modul aufweist, das konfiguriert ist, um:
biometrische Daten zu speichern, die von mindestens einer Person zur Authentifizierung erfasst werden, und Daten bezüglich der Authentifizierung der mindestens einen Person zu speichern, wobei
Authentifizierungsergebnisse erzeugt werden, indem mindestens eine aktuelle kumulative Paarigkeitscharakteristik- (Cumulative Match Characteristic; CMC)-Tabelle verwendet wird, die aus einer entsprechenden mindestens einen aktuellen CMC-Kurve erzeugt wird, wobei
die mindestens eine aktuelle CMC-Kurve die aktuelle Wahrscheinlichkeit zeigt, dass eine gegebene Person in verschieden dimensionierten Kandidatenlisten erscheint und die aktuellen Wahrscheinlichkeiten aus den gespeicherten biometrischen Daten berechnet werden, und die aktuelle CMC-Tabelle die aktuellen Wahrscheinlichkeiten sowie die entsprechenden Kandidatenlistengrößen enthält, um die aktuelle Wahrscheinlichkeit zu zeigen, dass eine Person in verschieden dimensionierten Kandidatenlisten erscheint;
zusätzliche biometrische Daten über eine zeitliche Periode zu erfassen, neue Wahrscheinlichkeiten zu berechnen, dass eine gegebene Person in verschieden dimensionierten Kandidatenlisten erscheint, indem die gespeicherten biometrischen Daten und die zusätzlichen biometrische Daten herangezogen werden, und Erzeugen mindestens einer neuen CMC-Tabelle, die die neuen Wahrscheinlichkeiten enthält; und die mindestens eine aktuelle CMC-Tabelle zu aktualisieren, um die neuen Wahrscheinlichkeiten aufzunehmen, wenn die jeweiligen neuen und aktuellen Wahrscheinlichkeiten voneinander verschieden sind.

2. System nach Anspruch 1, das ferner ein Abfragemittel enthält, das zum Abfragen der Authentifizierung der mindestens einen Person konfiguriert ist, um vordefinierte Parameter zu extrahieren und zu verwenden, um eine passende CMC-Tabelle aus einer Mehrzahl verfügbarer CMC-Tabellen zu wählen, wobei jede Tabelle der Mehrzahl verfügbarer CMC-Tabellen für spezifische Parameter im Voraus erzeugt wird.

3. System nach Anspruch 2, bei dem das Abfragemittel zum Bestimmen von Parametern konfiguriert ist, die der Eintragung des Nutzers zugeordnet sind, und zur Bestimmung von Parametern, die der Authentifizierungsanforderung zugeordnet sind.

4. System nach Anspruch 2, bei dem das Abfragemittel zum Abfragen einer Authentifizierungsanforderung konfiguriert ist, um eine korrekte CMC-Tabelle zu wählen, wobei die korrekte CMC-Tabelle im Voraus für die genauen Einzelheiten des Eintragens und der Authentifizierungsanforderungsparameter für den die Authentifizierungsanforderung stellenden Nutzer definiert worden ist.

5. System nach Anspruch 2, bei dem das Abfragemittel zum Abfragen sowohl einer Authentifizierungsanforderung als auch einer Eintrageanforderung konfiguriert ist, um eine passende Vorgehensweise für die betreffende Authentifizierungsanforderung zu bestimmen und zu identifizieren, wobei die passende Vorgehensweise eine korrekte CMC-Tabelle definiert, die als Teil der Authentifizierungsanforderung zu verwenden ist.

6. System nach einem der vorigen Ansprüche, bei dem die mindestens eine neue CMC-Tabelle zur periodischen Aktualisierung der aktuellen CMC-Tabellen verwendet wird, um das System entsprechend der Systemnutzung anzupassen.

7. Verteiltes Netz aus Authentifizierungssystemen nach einem der Ansprüche 1 bis 6, wobei das Netz mindestens ein Audit-Modul enthält, wobei das Audit-Modul zum Empfangen von Daten bezüglich der Authentifizierung mindestens einer Person aus mindestens einem der Authentifizierungssysteme im Netz konfiguriert ist, wobei das Audit-Modul konfiguriert ist, um:
nach einer zeitlichen Periode mindestens eine neue CMC-Tabelle anhand der biometrischen Daten der mindestens einen Person und der Daten bezüglich der Authentifizierung der mindestens einen Person zu erzeugen, wobei Authentifizierungsergebnisse für die mindestens eine Person anhand der aktuellen CMC-Wahrscheinlichkeiten in den aktuellen CMC-Tabellen erzeugt werden und die mindestens eine neue CMC-Tabelle neue Wahrscheinlichkeiten enthält;
die biometrischen Daten und die damit verbundenen Daten während der Periode zu speichern;
zu bestimmen, ob die jeweiligen neuen und die aktuellen CMC-Wahrscheinlichkeiten voneinander verschieden sind; und
die mindestens eine aktuelle CMC-Tabelle mit einem oder mehreren der Authentifizierungssysteme im Netz zu aktualisieren, wenn die jeweiligen neuen und die aktuellen CMC-Wahrscheinlichkeiten voneinander verschieden sind.

8. Netz nach Anspruch 7, bei dem jedes der Authentifizierungssysteme im Netz ein Audit-Modul enthält.

9. Netz nach Anspruch 8, bei dem jedes der Audit-Module zur Kommunikation mit anderen der Audit-Module konfiguriert ist, so dass eine Übertragung der aktualisierten CMC-Tabellen innerhalb der Authentifizierungssysteme möglich ist.

10. Netz nach Anspruch 7, bei dem das Audit-Modul von jedem der Authentifizierungssysteme getrennt bereitgestellt ist, wobei das Audit-Modul zur Kommunikation mit einem oder mehreren der Authentifizierungssysteme konfiguriert ist, um Daten bezüglich der CMC-Tabellen, die in den einzelnen Authentifizierungssystemen verwendet werden, zu empfangen und zu senden.

11. Verfahren zum Authentifizieren eines Nutzers auf Basis einer vom Nutzer präsentierten biometrischen Probe, wobei das Verfahren enthält:
Bereitstellen eines Entscheidungsmittels, das zum Authentifizieren eines Nutzers konfiguriert ist,
Aufnehmen eines biometrischen Merkmals von einem Nutzer, wenn eine Authentifizierung angefordert wird,
Erzeugen einer Anforderungsschablone aus dem aufgenommen biometrischen Merkmal,
Konfigurieren des Entscheidungsmittels, um den Nutzer auf Basis eines Vergleichs einer Anforderungsschablone mit einer oder mehreren zuvor gespeicherten Referenzschablonen zu authentifizieren,
Bereitstellen einer Paarigkeitsbewertung auf Basis eines Vergleichs der Anforderungsschablone mit den gespeicherten Referenzschablonen,
Weiterleiten der Paarigkeitsbewertung an das Entscheidungsmittel, um den Nutzer zu authentifizieren,
**dadurch gekennzeichnet, dass** das Verfahren ferner enthält:
Speichern biometrischer Daten, die von mindestens einer Person zur Authentifizierung erfasst werden, und Daten bezüglich der Authentifizierung der mindestens einen Person;
Erzeugen von Authentifizierungsergebnissen, indem mindestens eine aktuelle kumulative Paarigkeitscharakteristik- (Cumulative Match Characteristic; CMC)-Tabelle verwendet wird, die aus einer entsprechenden mindestens einen aktuellen CMC-Kurve erzeugt wird, wobei
die mindestens eine aktuelle CMC-Kurve die aktuelle Wahrscheinlichkeit zeigt, dass eine gegebene Person in verschieden dimensionierten Kandidatenlisten erscheint und die aktuellen Wahrscheinlichkeiten aus den gespeicherten biometrischen Daten berechnet werden, und
die aktuelle CMC-Tabelle die aktuellen Wahrscheinlichkeiten sowie die entsprechenden Kandidatenlistengrößen enthält, um die aktuelle Wahrscheinlichkeit zu zeigen, dass eine Person in verschieden dimensionierten Kandidatenlisten erscheint;
Erfassen zusätzlicher biometrischer Daten über eine zeitliche Periode;
Berechnen neuer Wahrscheinlichkeiten, dass die gegebene Person in verschieden dimensionierten Kandidatenlisten erscheint, indem die gespeicherten biometrischen Daten und die zusätzlichen biometrischen Daten herangezogen werden;
Erzeugen mindestens einer neuen CMC-Tabelle, die die neuen Wahrscheinlichkeiten enthält; und
Aktualisieren der mindestens einen aktuellen CMC-Tabelle, um die neuen Wahrscheinlichkeiten aufzunehmen, wenn die jeweiligen neuen und die aktuellen Wahrscheinlichkeiten voneinander verschieden sind.

12. Verfahren nach Anspruch 11, das ferner das Vergleichen der jeweiligen neuen und aktuellen CMC-Wahrscheinlichkeiten und das Erzeugen einer Warnung beim Erkennen einer vorgegebenen Differenz zwischen den zwei Wahrscheinlichkeiten enthält.

## Revendications

1. Système d'authentification biométrique, comprenant :
des moyens de décision configurés pour authentifier un utilisateur,
un dispositif de capture pour capturer des données biométriques provenant d'un utilisateur lors d'une demande d'authentification,
des moyens de traitement pour générer un modèle de demande à partir des données biométriques capturées, les moyens de décision authentifiant l'utilisateur sur la base d'une comparaison du modèle de demande par rapport à un ou plusieurs modèles de référence mémorisés précédemment,
une unité de mise en correspondance pour fournir sous la forme d'un résultat d'un score de correspondance sur la base d'une comparaison du modèle de demande et des modèles de référence stockés,
les moyens de décision peuvent coopérer avec l'unité de mise en correspondance pour recevoir le score de correspondance et, sont configurés pour authentifier l'utilisateur, **caractérisé en ce que** le système d'authentification comprend en outre un module d'audit configuré pour :
stocker des données biométriques collectées à partir d'au moins un individu en vue d'une authentification et stocker des données relatives à une authentification d'au moins un individu, dans lequel les résultats d'authentification sont générés en utilisant au moins un tableau de caractéristique de correspondance cumulée (CMC) généré à partir d'au moins une courbe CMC actuelle correspondante, où
la au moins une courbe CMC actuelle représente la probabilité actuelle qu'une personne donnée apparaisse dans des listes de candidats de taille différente, et les probabilités actuelles sont calculées à partir des données biométriques mémorisées, et le tableau CMC actuel comprend les probabilités actuelles et les tailles de listes de candidats correspondantes pour représenter la probabilité actuelle qu'une personne apparaisse dans des listes de candidats de taille différente ;
collecter les données biométriques supplémentaires sur une période, calculer les nouvelles probabilités que la personne donnée apparaisse dans des listes de candidats de taille différente à l'aide des données biométriques mémorisées et des données biométriques supplémentaires, et générer au moins un nouveau tableau CMC comprenant les nouvelles probabilités ; et
mettre à jour le au moins un tableau CMC actuel pour inclure les nouvelles probabilités lorsque les nouvelles probabilités et les probabilités actuelles respectives sont différentes.

2. Système selon la revendication 1, comprenant en outre des moyens d'interrogation configurés pour interroger l'authentification d'au moins un individu de manière à extraire et utiliser des paramètres prédéfinis pour sélectionner un tableau CMC approprié parmi une pluralité de tableaux CMC disponibles, chacun parmi la pluralité de tableaux CMC disponibles étant généré précédemment pour des paramètres spécifiques.

3. Système selon la revendication 2, dans lequel les moyens d'interrogation sont configurés pour déterminer les paramètres associés à l'enregistrement de l'utilisateur et pour déterminer des paramètres associés à une demande d'authentification.

4. Système selon la revendication 2, dans lequel les moyens d'interrogation sont configurés pour interroger une demande d'authentification de manière à sélectionner un tableau CMC correct, le tableau CMC correct ayant été défini au préalable pour les spécificités de l'enregistrement et pour les paramètres de demande d'authentification pour l'utilisateur faisant la demande d'authentification.

5. Système selon la revendication 2, dans lequel les moyens d'interrogation sont configurés pour interroger à la fois une demande d'authentification et une demande d'enregistrement de manière à déterminer et identifier une règle appropriée pour cette demande d'authentification, la règle appropriée définissant un tableau CMC correct à utiliser en tant que partie de la demande d'authentification.

6. Système selon l'une quelconque des revendications précédentes, dans lequel le au moins un nouveau tableau CMC est utilisé pour mettre à jour les tableaux CMC actuels de manière périodique de manière à fournir un réglage du système basé sur l'utilisation du système.

7. Réseau distribué de systèmes d'authentification selon l'une quelconque des revendications 1 à 6, le réseau comprenant au moins un module d'audit, le module d'audit étant configuré pour recevoir des données relatives à l'authentification d'au moins un individu parmi au moins un des systèmes d'authentification dans le réseau, le module d'audit étant configuré pour :
générer, après une période, au moins un nouveau tableau CMC à l'aide de données biométriques du au moins un individu et des données relatives à l'authentification du au moins un individu, où les résultats d'authentification sont générés pour le au moins un individu à l'aide des probabilités CMC actuelles comprises dans des tableaux CMC actuels, et le au moins un nouveau tableau CMC comprend de nouvelles probabilités ;
mémoriser les données biométriques et les données relatives pendant la période ;
estimer si de nouvelles probabilités CMC et des probabilités CMC actuelles respectives sont différentes ; et
mettre à jour le au moins un tableau CMC actuel avec un ou plusieurs des systèmes d'authentification dans le réseau lorsque les nouvelles probabilités CMC et les probabilités CMC actuelles respectives sont différentes.

8. Réseau selon la revendication 7, dans lequel chacun des systèmes d'authentification dans le réseau comprend un module d'audit.

9. Réseau selon la revendication 8, dans lequel tous les modules d'audit sont configurés pour communiquer les uns avec les autres de manière à permettre un transfert des tableaux CMC mis à jour entre les systèmes d'authentification.

10. Réseau selon la revendication 7, dans lequel le module d'audit est distinct de l'un quelconque des systèmes d'authentification, le module d'audit étant configuré pour communiquer avec un ou plusieurs des systèmes d'authentification de manière à recevoir et transmettre des données relatives aux tableaux CMC utilisés dans des systèmes d'authentification individuels.

11. Procédé d'authentification d'un utilisateur basé sur un échantillon biométrique présenté par un utilisateur, le procédé comprenant les étapes consistant à :
fournir des moyens de décision configurés pour authentifier un utilisateur,
capturer des données biométriques provenant d'un utilisateur lors d'une demande d'authentification,
générer un modèle de demande à partir des données biométriques capturées,
configurer les moyens de décision pour authentifier l'utilisateur sur la base d'une comparaison d'un modèle de demande avec un ou plusieurs modèles de référence mémorisés précédemment,
fournir un score de correspondance sur la base d'une comparaison du modèle de demande et des modèles de référence mémorisés,
transmettre le score de correspondance aux moyens de décision afin d'authentifier l'utilisateur,
**caractérisé en ce que** le procédé comprend en outre les étapes consistant à :
mémoriser des données biométriques collectées à partir d'au moins un individu en vue d'une authentification et mémoriser les données relatives à l'authentification d'au moins un individu ;
générer les résultats d'authentification en utilisant au moins un tableau actuel de caractéristique de correspondance cumulée (CMC) généré à partir d'au moins une courbe CMC actuelle correspondante, dans lequel
la au moins une courbe CMC actuelle représente la probabilité actuelle qu'une personne donnée apparaisse dans des listes de candidats de taille différente et les probabilités actuelles sont calculées à partir des données biométriques mémorisées, et
le tableau CMC actuel comprend les probabilités actuelles et les tailles de listes de candidats correspondantes pour représenter la probabilité actuelle qu'une personne apparaisse dans des listes de candidats de taille différente ;
collecter des données biométriques supplémentaires sur une période ;
calculer les nouvelles probabilités que la personne donnée apparaisse dans des listes de candidats de taille différente à l'aide des données biométriques mémorisées et des données biométriques supplémentaires ;
générer au moins un nouveau tableau CMC comprenant des nouvelles probabilités ; et
mettre à jour le au moins un tableau CMC actuel pour inclure les nouvelles probabilités lorsque les nouvelles probabilités et les probabilités actuelles respectives sont différentes.

12. Procédé selon la revendication 11, comprenant en outre la comparaison des nouvelles probabilités CMC et des probabilités CMC actuelles respectives, et la génération d'une alerte lors de la détection d'une différence prédéterminée entre les deux probabilités.
